# FASCICULE DE BREVET EUROPEEN

(11) **EP 3 523 141 B1**
(45) Date de publication et mention de la délivrance du brevet: **02.12.2020**
(21) Numéro de dépôt: 17792116.0
(22) Date de dépôt: 03.10.2017
(51) Int. Cl.: B60C 13/00, B60C 13/02

(54) **PNEU POUR VÉHICULE DESTINÉ À PORTER DE LOURDES CHARGES**
REIFEN FÜR FAHRZEUG ZUM TRAGEN SCHWERER LASTEN
TYRE FOR VEHICLE INTENDED TO SUPPORT HEAVY LOADS

(30) Priorité: 04.10.2016 FR 1659554
(43) Date de publication de la demande: 14.08.2019
(73) Titulaire: Compagnie Générale des Etablissements Michelin, 63000 Clermont-Ferrand (FR)
(72) Inventeur: BUFFETAUD, Benoit, 63040 Clermont-Ferrand Cedex 9 (FR); GODEAU, Gilles, 63040 Clermont-Ferrand Cedex 9 (FR); LARREGAIN, Arnaud, 63040 Clermont-Ferrand Cedex 9 (FR)
(74) Mandataire: Lasson, Cédric Yves
(86) Numéro de dépôt international: PCT/FR2017/052711
(87) Numéro de publication internationale: WO 2018/065719

(56) Documents cités:
- EP-A1- 2 127 911
- FR-A1- 3 027 256
- JP-A- 2004 268 809

## Description

### DOMAINE DE L'INVENTION

La présente invention concerne un pneu pour véhicule destiné à porter de lourdes charges.

### ÉTAT DE LA TECHNIQUE

Un pneu pour véhicule poids lourd comprend deux bourrelets destinés à venir en contact avec une jante de montage, deux flancs prolongeant ces bourrelets, ces flancs étant reliés entre eux par un sommet lui-même surmonté par une bande de roulement.

Le pneu comprend une armature de carcasse s'étendant d'un bourrelet à l'autre en passant par les flancs et le sommet. Complémentairement le sommet du pneu comprend une armature de renforcement combinée à l'armature de carcasse. Ce sommet est surmonté radialement à l'extérieur par une bande de roulement dont une surface - dite surface de roulement - est destinée à venir en contact avec une chaussée ou un sol pendant le roulage du véhicule pourvu de ce pneu.

Il est connu que les pneus pour véhicule poids lourd, notamment ceux utilisés sur des réseaux routiers de mauvaise qualité, peuvent être agressé par des corps externes lors de roulage ou de manœuvres. Ces mêmes pneus peuvent également venir, lors de roulages en zones urbaines, en contact avec des trottoirs et autres obstacles lesquels, dans certaines conditions, peuvent venir en contact et blesser l'un des flancs. Ces agressions sont la conséquence d'un contact entre un flanc et un corps rigide, ledit corps rigide étant bloqué en glissement contre le flanc et provoquant de grandes déformations dudit flanc.

Si la majorité de ces agressions n'a que peu d'influence sur la tenue mécanique des flancs, il peut toutefois apparaître des cassures dans le flanc sollicité. Cela est bien entendu fortement préjudiciable à la durée de vie des pneus puisque les flancs sont très souvent non réparables, les cassures se propageant entre les renforts de l'armature de carcasse dans les flancs.

Ces agressions en sollicitant violemment l'armature de carcasse peuvent provoquer des ruptures de la matière caoutchoutique présente sur et entre les renforts de l'armature de carcasse avec toutes les conséquences que l'on peut imaginer, notamment une perte de pression plus ou moins rapide.

Ces mêmes agressions générant de grandes déformations peuvent, sans provoquer de cassures à l'instant du contact, affecter la résistance mécanique du pneu aux flexions répétées en roulage.

Ce problème est connu et il a déjà été proposé des solutions, telles que décrites dans les documents EP 2127911 A1, FR 3027256 A1 et JP 2004/268809 A, mais il semblerait qu'aucune des solutions connues ne soit pleinement satisfaisante.

On connaît la demande WO2009/029088 qui décrit un pneu pour un usage tout terrain, ce pneu étant pourvu de blocs de protection formés en relief sur ses flancs. Ces blocs de protection ont des surfaces inclinées qui permettent d'éviter tout accrochage avec un obstacle externe. Les blocs de protection sont disposés sur au moins deux lignes circulaires concentriques à l'axe de rotation de façon à être placés en alternance mais sans contact entre eux.

On connaît la demande US2013/0092308-A1 qui décrit un pneu dont les flancs sont pourvus d'une pluralité de motif en relief sur les flancs, ces motifs ayant une forme massive sont placés sur deux lignes circulaires concentriques les uns à côté des autres sur chaque ligne en ménageant un espace suffisant entre les motifs afin que chaque motif d'une ligne s'intercale partiellement entre deux motifs de l'autre ligne et puissent se déformer librement.

### Définitions :

Par direction radiale, on entend toute direction qui est perpendiculaire à l'axe de rotation du pneu.

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Un plan de coupe radial est un plan contenant l'axe de rotation ; un plan de coupe radial coupe la paroi externe d'un flanc de pneu selon une ligne méridienne. La direction méridienne suit cette ligne méridienne dans un plan radial.

### BREF EXPOSE DE L'INVENTION

Les documents de l'art antérieur s'ils permettent une sensible amélioration de la tenue des flancs aux agressions restent toutefois à améliorer par une meilleure optimisation de la forme des protubérances et de leur agencement sur les flancs d'un pneu.

La présente invention vise à proposer un pneu pour véhicule destiné à porter de lourdes charges amélioré en endurance, ce pneu ayant au moins un flanc protégé des agressions externes subies lors d'un contact avec un obstacle pendant le roulage de ce pneu. Ce contact contre un obstacle génère un effort de forte intensité dont une composante est dirigée dans une direction pointant vers l'intérieur de la cavité interne du pneu (cette cavité contient l'air de gonflage) et une autre composante dirigée dans la direction circonférentielle et une dirigée dans la direction méridienne.

À cet effet, l'invention a pour objet un pneu pour véhicule destiné à porter de lourdes charges tel que couvert par la revendication indépendante 1.

Une protubérance est dite recouvrir partiellement dans la direction circonférentielle une autre protubérance dès lors qu'un plan radial tangent à une protubérance située sur une ligne circulaire voisine est tangent ou coupe une protubérance située sur une autre ligne circulaire voisine de façon à ce que les protubérances ferment le passage dans la direction méridienne sur toute la circonférence du pneu.

Une protubérance est dite recouvrir partiellement dans la direction radiale une autre protubérance dès lors qu'il existe au moins un cercle centré sur l'axe de rotation qui coupe lesdites deux protubérances.

Un profil convexe est dit dépourvu de toute arête dès lors que les pentes sur ce profil sont continues en tout point de la protubérance, à l'exception de la ligne de raccordement avec la paroi de flanc.

L'expression « ligne circulaire » recouvre de manière générique une ligne fermée autour de l'axe de rotation, cette ligne pouvant être un cercle ou bien encore une ligne fermée différente d'un cercle.

Grâce à cette combinaison de caractéristiques, il est possible d'empêcher le blocage du point de contact d'un obstacle sur la paroi d'un flanc en rendant possible le glissement entre cet obstacle et la paroi du flanc du pneu ce qui se traduit par une moindre sensibilité des flancs d'un pneu aux agressions subies lors du contact par poinçonnement contre des obstacles externes.

Le point haut Pi de tout profil obtenu dans un plan de coupe radial est défini comme le point le plus éloigné de la surface du flanc et est situé à une hauteur Hi qui est définie comme la distance entre le point Pi et la droite joignant les points d'intersection Ai et Bi de la protubérance avec la surface externe du flanc sur lequel ladite protubérance est formée dans ce même plan de coupe radial.

Avantageusement, chaque protubérance est formée en relief pour avoir une hauteur maximale Hi au plus égale à 10 mm et une longueur circonférentielle maximale Lci allant de 20 mm à 70 mm, et une longueur méridienne maximale Lmi allant de 5 mm à 15 mm.

Avantageusement, chaque protubérance située sur une ligne circulaire est apte à entrer en contact avec au moins une protubérance d'une ligne circulaire voisine afin de générer un frottement par glissement d'une protubérance sur l'autre lorsque l'une desdites protubérances vient en contact avec un obstacle externe, dans le but de réduire encore les risques de déchirures du flanc sur lequel la pluralité des protubérances est formée.

Avantageusement, toutes les protubérances de toutes les lignes circulaires sont telles que le point haut Pi de tout profil externe obtenu en coupe dans tout plan de coupe radial, ce point étant le plus à l'extérieur par rapport à la surface externe du flanc portant la protubérance, est décalé dans la direction méridienne par rapport à la position médiane de la protubérance selon une même direction, soit vers la bande de roulement soit vers le bourrelet respectif du pneu.

Avantageusement, les protubérances d'une première ligne circulaire sont disposées en opposition par rapport aux protubérances d'une ligne circulaire voisine, c'est à dire que les points hauts des protubérances situées sur une première ligne circulaire sont décalés dans la direction méridienne par rapport à la position médiane de la protubérance vers la bande de roulement tandis que les points hauts des protubérances d'une ligne circulaire voisine sont décalés vers le bourrelet respectif du pneu.

Avantageusement et en combinaison avec l'une quelconque des précédentes dispositions, le volume des protubérances du dispositif de protection va en diminuant pour des lignes circulaires plus proches de l'axe de rotation du pneu : le volume diminue en allant de la bande de roulement du pneu vers le bourrelet.

Avantageusement le point haut Pi de chaque protubérance est décalé par rapport à la position médiane de la protubérance d'au moins 20% et d'au plus 40% de la longueur méridienne maximale Lmi de ladite protubérance dans la direction méridienne.

Les différentes variantes précédemment énoncées peuvent aisément être combinées entre elles par la personne du métier en fonction du besoin.

### BREVE DESCRIPTION DES FIGURES

La figure 1 représente une vue en coupe d'une partie d'un flanc d'un pneu selon une première variante de l'invention ;
La figure 2 représente une vue d'une partie du flanc du pneu de la figure 1 réalisée dans un plan de coupe radial dont la trace est indiquée par la ligne II-II sur la figure 1 ;
La figure 3 montre une vue de la surface d'une protubérance utilisée sur le pneu montré avec la figure 1 ;
La figure 4 montre une vue en coupe selon un plan de coupe dont la trace sur la figure 3 est indiquée par la ligne IV-IV ;
La figure 5 montre une variante de pneu comprenant un dispositif de protection de flanc selon une autre variante ;
La figure 6 montre une autre variante de dispositif de protection selon l'invention.

### DESCRIPTION DES FIGURES

Pour faciliter la lecture des figures, des signes de référence identiques sont employés sur les différentes figures pour décrire les variantes de l'invention dès lors que ces signes de référence renvoient à des éléments d'une même nature qu'elle soit structurelle ou bien fonctionnelle.

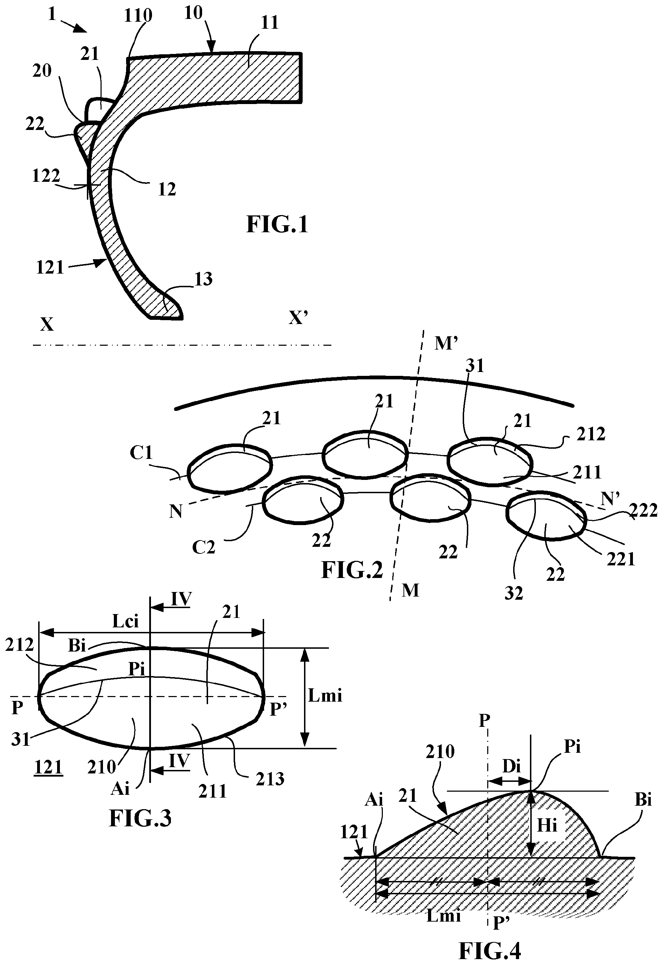

La figure 1 représente, vue en coupe dans un plan de coupe radial contenant l'axe de rotation du pneu XX', une partie d'un pneu 1 pour véhicule poids lourd de dimension 315/80 R 22.5. Ce pneu 1 comprend une bande de roulement 11 destinée à venir en contact avec un sol pendant le roulage par sa surface de roulement 10, cette bande de roulement 11 étant prolongée de part et d'autre par des flancs 12, chacun de ces flancs se terminant par des bourrelets 13 destinés à venir en contact avec une jante de montage.

Ce pneu comporte un dispositif de protection 20 formé sur la surface externe 121 de l'un de ses flancs 12.

Sur cette première variante de pneu selon l'invention on distingue sur l'un des flancs 12 du pneu une pluralité de protubérances 21, 22 moulées et réparties sur tout le tour du pneu selon deux lignes circulaires concentriques à l'axe de rotation du pneu indiqué par la direction XX' sur la figure. Cet ensemble de protubérances forme le dispositif de protection 20 du flanc contre les agressions causées par des objets contre lesquels le pneu peut venir en contact lors du roulage. Ce dispositif de protection 20 est localisé sur la surface externe 121 du flanc 12 entre l'arête 110 limitant axialement la surface de roulement 10 de la bande de roulement et un cercle centré sur l'axe de rotation et passant par les points 122 axialement les plus à l'extérieur du flanc 12, ces points 122 étant déterminés dans une configuration de pneu monté sur sa jante de montage et gonflé à sa pression d'utilisation.

On aperçoit de façon plus claire le dispositif de protection 20 sur la figure 2 qui montre une partie du flanc 12 du pneu de la figure 1. Sur cette figure 2, on voit qu'il a été moulé deux séries de protubérances 21, 22 disposées respectivement sur deux lignes circulaires C1, C2 de rayons différents. Sur chaque ligne circulaire, les protubérances sont disposées de manière régulière avec un pas constant. La ligne circulaire d'une série de protubérances coupe chaque protubérance par son milieu, c'est à dire par son point situé à égale distance des points de raccordement de la protubérance avec le flanc les plus éloignés dans la direction méridienne. La direction méridienne est indiquée par la ligne MM' sur la figure 2 tandis que la direction circonférentielle est indiquée par la ligne NN' sur cette même figure.

Sur cette figure 2, on voit que les protubérances 21, 22 pour cette variante ont une même géométrie quelle que soit la ligne circulaire C1 ou C2 considérée. Elles sont disposées de façon à générer un chevauchement dans la direction radiale et un chevauchement dans la direction circonférentielle. On voit en effet qu'un plan radial (plan contenant l'axe de rotation du pneu indiqué sur la figure 2 par sa trace MM') qui est tangent à une protubérance 21 de la ligne C1 coupe une protubérance 22 de la ligne C2.

Il existe aussi un recouvrement partiel dans la direction méridienne entre les protubérances 21 et 22 comme le montre la figure 2. Des points des protubérances 21 de la ligne circulaire C1 sont sur un cercle NN' ledit cercle traversant aussi les protubérances 22 de la ligne circulaire C2.

Lors de la mise en contact du flanc du pneu pourvu du dispositif de protection contre un objet externe, cet objet vient au contact de protubérances 21 de la ligne circulaire C1 et provoque une déformation à la fois de ces protubérances et du flanc sous-jacent jusqu'à ce que ces protubérances viennent en contact avec des protubérances 22 de la ligne circulaire C2. Lorsque le pneu continue de rouler, le contact entre l'objet externe et les protubérances évolue au point qu'il se produit un transfert d'effort des protubérances de la première ligne circulaire vers la seconde ligne circulaire, ce qui permet d'éviter une localisation de l'action de l'objet externe sur la surface du flanc du pneu.

La figure 3 montre une vue surfacique d'une protubérance 21 sur la surface 121 du flanc que l'on cherche à protéger par le dispositif de protection 20 selon l'invention. La protubérance 21 présente un contour de raccordement 213 avec la surface externe 121 du flanc. Chaque protubérance 21 a une longueur maximale **Lmi** égale dans l'exemple décrit à 10.8 mm ; cette longueur maximale est mesurée entre les points Ai et Bi du contour 213 les plus éloignés l'un de l'autre dans un même plan de coupe radial (la trace de ce plan est indiquée par la ligne IV-IV sur cette figure 3.

Chaque protubérance 21 a une largeur circonférentielle maximale **Lci** égale, dans le cas présent, à 25.6 mm.

Par ailleurs et comme on peut le voir en lien avec la figure 4 montrant la même protubérance 21 en coupe dans un plan radial (plan contenant l'axe de rotation du pneu) dont la trace est indiquée par la ligne IV-IV sur la figure 3, la protubérance 21 a un profil externe 210 qui est convexe et dépourvu de toute arête, ce profil 210 passant par un point haut Pi défini comme étant le point le plus éloigné de la surface 121 du flanc. Ce profil externe comprend une première partie 211, dite « partie étendue », de profil croissant en hauteur de façon régulière et monotone par rapport à la surface 121 du flanc du pneu, cette première partie étendue 211 étant prolongée à partir du point haut Pi par une seconde partie 212, dite «partie réduite », de profil décroissant en hauteur de façon régulière et monotone.

Le point Pi est à une distance Hi maximale égale, dans l'exemple décrit, à 5 mm de la surface du flanc et est décalé dans la direction méridienne d'une distance Di par rapport à la position médiane de la protubérance (cette position médiane est indiquée par sa trace PP' dans le plan de la figure 3). Dans cet exemple, le décalage Di est égal à 3 mm.

Chaque protubérance 21 est telle que ce même type de géométrie est obtenu avec tout autre plan de coupe radial coupant la protubérance 21, à la différence que la hauteur du profil est au plus égale à la hauteur Hi. Dans l'exemple décrit, la protubérance 21 est construite de manière symétrique par rapport à un plan de coupe radial dont la trace est indiquée par la ligne IV-IV sur la figure 3.

Il est possible d'envisager de former des protubérances non symétriques, c'est à dire telles que le point haut Pi de hauteur maximale est de plus décalé dans la direction circonférentielle.

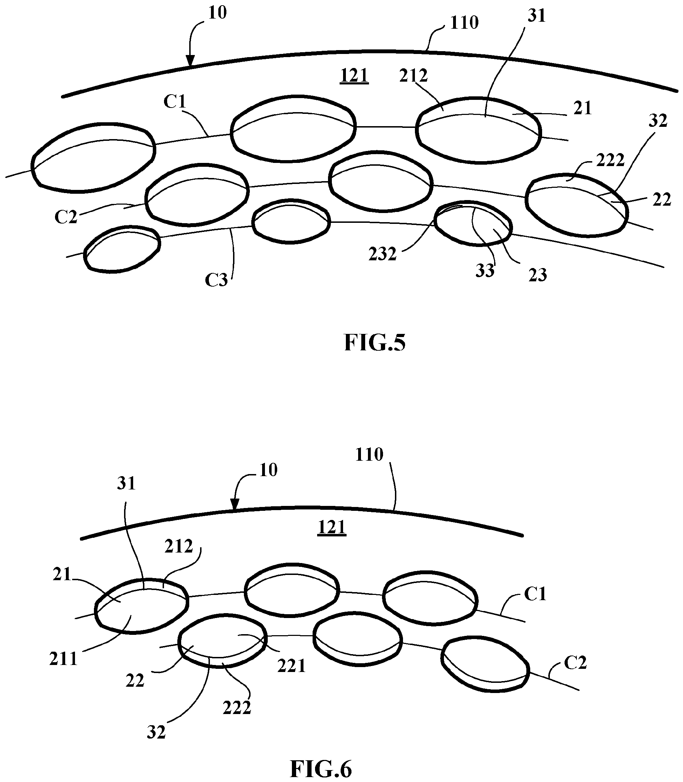

La figure 5 montre une vue partielle d'un flanc de pneu comprenant une variante de dispositif de protection selon l'invention. Dans cette variante, un pneu comprend, moulé sur la paroi externe 121 d'un de ses flancs 12, un dispositif de protection 20 composé de trois séries de protubérances 21, 22, 23 disposées sur trois lignes circulaires C1, C2, C3. La ligne circulaire C1 est plus proche de l'arête 110 délimitant la surface 10 de la bande de roulement et le flanc 12 que les deux autres lignes circulaires C2, C3, cette dernière se trouvant être la plus proche du bourrelet du pneu.
Dans cette variante les protubérances 21 de la ligne circulaire C1 ont chacune un volume V1, celles 22 de la ligne circulaire C2 un volume V2 et celles 23 de la ligne circulaire C3 un volume V3, ces volumes étant tels que le volume V1 est plus grand que le volume V2 lui-même plus grand que le volume V3. Cette répartition des volumes des protubérances et par voie de conséquence des rigidités de ces éléments de relief sur le flanc du pneu est favorable à une meilleure résistance à une sollicitation mécanique d'indentation provoquée par un objet venant en contact pendant le roulage grâce à une évolution de la rigidité apparente du flanc en fonction du roulage.

Dans une variante de l'invention, il est en outre avantageux que les protubérances soient positionnées les unes par rapport aux autres de manière à pouvoir venir en contact entre elles : une protubérance de la ligne circulaire la plus proche de l'arête délimitant la bande de roulement étant en mesure de venir en contact avec au moins une protubérance d'une ligne circulaire voisine lorsqu'un objet externe au pneu vient en contact.

Dans une autre variante, montrée avec la figure 6, le dispositif de protection 20 selon l'invention comprend une pluralité de protubérances 21, 22 moulées sur la face externe 121 d'un flanc 12, ces protubérances étant réparties sur deux lignes circulaires C1 et C2.

Les protubérances 21 d'une première ligne C1 (la plus proche de la bande de roulement) sont disposées de manière à ce que la partie réduite 212 de chaque protubérance 21 soit située du côté de la bande de roulement (indiquée par son arête 10 sur la figure 6) tandis que pour chaque protubérance 22 de la deuxième ligne C2 la partie réduite 222 est disposée du côté de la région des bourrelets du pneu. Dans cette variante, les protubérances 21 et 22 sont donc disposées en opposition entre les deux lignes circulaires C1 et C2. Cette disposition améliore l'efficacité du dispositif en générant une modulation de la répartition des rigidités des protubérances contre lesquelles un objet externe peut venir en contact lors du roulage.

La description d'un nombre réduit de variantes de l'invention, dans le seul but de faire comprendre l'invention, ne saurait bien entendu limiter la portée de cette invention qui est définie par les revendications ; la personne du métier est à même d'adapter à son besoin les paramètres de l'invention.

## Revendications

1. Pneu (1) pour véhicule destiné à porter de lourdes charges, ce pneu (1) comportant un sommet comprenant une bande de roulement (11) destinée à être en contact avec une chaussée lors d'un roulage, ce sommet étant prolongé de part et d'autre par des flancs (12), ces flancs (12) étant reliés à des bourrelets (13) destinés à venir en contact avec une roue, ce pneu (1) comprenant une armature de carcasse ayant des renforts, cette armature de carcasse s'étendant d'un bourrelet (13) à l'autre en passant par les flancs (12) et le sommet du pneu (1), ce pneu (1) étant pourvu sur une surface externe (121) d'au moins un flanc (12), d'un dispositif de protection (20) contre des agressions extérieures, ce dispositif de protection (20) étant composé d'une pluralité de protubérances (21, 22) réparties sur un nombre N de lignes circulaires (C1, C2) concentriques à l'axe de rotation (XX') du pneu (1), ce nombre N étant au moins égal à deux, chaque protubérance (21, 22) ayant une géométrie externe telle que tout profil externe (210) de cette protubérance (21, 22), vu dans tout plan de coupe radial contenant l'axe de rotation (XX') du pneu (1), est un profil convexe comportant un point haut (Pi) défini comme le point le plus éloigné de la surface externe (121) du flanc (12) sur lequel la protubérance (21, 22) est formée,
chaque protubérance (21, 22) ayant une surface externe dont la géométrie est dépourvue de toute arête, à l'exception de son intersection avec la surface externe (121) du flanc (12) sur lequel la protubérance (21, 22) est formée, afin d'éviter toute discontinuité de pente, le profil externe (210) de chaque protubérance (21, 22) comprenant une première partie (211, 221), dite partie étendue, de hauteur croissante de façon régulière et monotone par rapport à la surface externe (121) du flanc (12) du pneu (1) sur lequel la protubérance (21, 22) est formée, cette partie étendue étant prolongée à partir du point haut (Pi) par une seconde partie, dite partie réduite, de hauteur décroissante de façon régulière et monotone par rapport à la surface externe (121) du flanc (12) du pneu (1) sur lequel la protubérance (21, 22) est formée, ce pneu (1) étant **caractérisé en ce que**, pour chaque protubérance (21, 22), le point haut (Pi) de tout profil externe (210) est décalé dans la direction méridienne (MM') par rapport à la position médiane de la protubérance (21, 22), cette position médiane pour chaque plan de coupe radial étant définie comme la position située à mi-distance entre des points d'intersection (Ai, Bi) de la protubérance (21, 22) avec la surface externe (121) du flanc (12) sur lequel la protubérance (21, 22) est formée dans ce même plan de coupe radial, **et en ce que**
- les protubérances (21) d'une première ligne circulaire (C1) recouvrent partiellement les protubérances (22) d'une ligne circulaire voisine (C2) dans la direction circonférentielle (NN'), de telle sorte qu'un plan radial tangent à une protubérance (21) située sur la première ligne circulaire (C1) est tangent ou coupe une protubérance (22) située sur la ligne circulaire voisine (C2) de façon à ce que les protubérances (21) de la première ligne circulaire (C1) et les protubérances (22) de la ligne circulaire voisine (C2) ferment le passage dans la direction méridienne (MM') sur toute la circonférence du pneu (1), et dans la direction méridienne (MM'), de telle sorte qu'il existe au moins un cercle centré sur l'axe de rotation (XX') du pneu (1), qui coupe les protubérances (21) de la première ligne circulaire (C1) et les protubérances (22) de la ligne circulaire voisine (C2).

2. Pneu (1) selon la revendication 1 **caractérisé en ce que** chaque protubérance (21, 22) est formée en relief pour avoir une hauteur maximale (**Hi**) au plus égale à 10 mm, cette hauteur maximale (**Hi**) étant définie comme la distance du point haut (Pi) à la droite joignant les points d'intersection (Ai, Bi) de la protubérance (21, 22) avec la surface externe (121) du flanc (12) sur lequel ladite protubérance (21, 22) est formée dans ce même plan de coupe radial, et une longueur circonférentielle maximale (**Lci**) allant de 20 mm à 70 mm, et une longueur méridienne maximale (**Lmi**) allant de 5 mm à 15 mm.

3. Pneu (1) selon la revendication 1 ou la revendication 2 **caractérisé en ce que**, chaque protubérance (21) située sur une ligne circulaire (C1) est apte à entrer en contact avec au moins une protubérance (22) d'une ligne circulaire voisine (C2) afin de générer un frottement par glissement d'une protubérance sur l'autre lorsque l'une desdites protubérances (21, 22) vient en contact avec un obstacle externe, dans le but de réduire encore les risques de déchirures du flanc (12) sur lequel la pluralité des protubérances (21, 22) est formée.

4. Pneu (1) selon l'une des revendications 1 à 3 **caractérisé en ce que** toutes les protubérances (21, 22) du dispositif de protection (20) sont telles que le point haut (Pi) de tout profil externe (210) obtenu en coupe dans tout plan de coupe radial est décalé dans la direction méridienne (MM') par rapport à la position médiane de la protubérance (21, 22) selon une même direction, soit vers la bande de roulement (11) soit vers le bourrelet respectif (13) du pneu (1).

5. Pneu (1) selon la revendication 4 **caractérisé en ce que** les protubérances (21) d'une première ligne circulaire (C1) sont disposées en opposition par rapport aux protubérances (22) d'une ligne circulaire (C2) voisine, c'est à dire que les points hauts (Pi) des protubérances (21) sur une première ligne circulaire (C1) sont décalés dans la direction méridienne (MM') par rapport à la position médiane de chaque protubérance (21) vers la bande de roulement (11) tandis que les points hauts (Pi) des protubérances (22) d'une ligne circulaire (C2) voisine sont décalés vers le bourrelet respectif (13) du pneu (1).

6. Pneu (1) selon l'une des revendications 1 à 5 **caractérisé en ce que** le volume des protubérances (21, 22, 23) du dispositif de protection (20) va en diminuant pour des lignes circulaires plus proches de l'axe de rotation (XX') du pneu (1).

7. Pneu (1) selon l'une des revendications 1 à 6 **caractérisé en ce que** le point haut (Pi) de chaque protubérance (21, 22) le plus à l'extérieur de la surface externe (121) du flanc (12) sur lequel ladite protubérance (21, 22) est formée, est décalé d'au moins 20% et d'au plus 40% de la longueur méridienne maximale (**Lmi**) de ladite protubérance (21, 22) dans la direction méridienne (MM') par rapport à la position médiane de la protubérance (21, 22).

## Patentansprüche

1. Reifen (1) für ein Fahrzeug, das dazu bestimmt ist, schwere Lasten zu tragen, wobei dieser Reifen (1) einen Scheitel aufweist, der einen Laufstreifen (11) umfasst, der dazu bestimmt ist, sich beim Fahren mit einer Fahrbahn in Kontakt zu befinden, wobei dieser Scheitel beiderseits durch Seitenwände (12) verlängert ist, wobei diese Seitenwände (12) mit Wülsten (13) verbunden sind, die dazu bestimmt sind, mit einem Rad in Kontakt zu kommen, wobei dieser Reifen (1) eine Karkassenbewehrung umfasst, die Festigkeitsträger aufweist, wobei sich diese Karkassenbewehrung von einem Wulst (13) zum anderen erstreckt und dabei durch die Seitenwände (12) und den Scheitel des Reifens (1) verläuft,
wobei dieser Reifen (1) auf einer Außenfläche (121) wenigstens einer Seitenwand (12) mit einer Vorrichtung zum Schutz (20) vor äußeren aggressiven Einwirkungen versehen ist, wobei diese Schutzvorrichtung (20) aus mehreren Ausstülpungen (21, 22) besteht, die auf einer Anzahl N von zur Drehachse (XX') des Reifens (1) konzentrischen Kreislinien (C1, C2) verteilt sind, wobei diese Anzahl N wenigstens gleich zwei ist, wobei jede Ausstülpung (21, 22) eine solche äußere Geometrie aufweist, dass jedes äußere Profil (210) dieser Ausstülpung (21, 22), in irgendeiner radialen Schnittebene gesehen, welche die Drehachse (XX') des Reifens (1) enthält, ein konvexes Profil ist, das einen oberen Punkt (Pi) aufweist, der als der von der Außenfläche (121) der Seitenwand (12), auf welcher die Ausstülpung (21, 22) ausgebildet ist, am weitesten entfernte Punkt definiert ist,
wobei jede Ausstülpung (21, 22) eine Außenfläche aufweist, deren Geometrie mit keinerlei Kanten versehen ist, mit Ausnahme ihrer Schnittlinie mit der Außenfläche (121) der Seitenwand (12), auf welcher die Ausstülpung (21, 22) ausgebildet ist, um jede Diskontinuität der Schräge zu vermeiden, wobei das äußere Profil (210) jeder Ausstülpung (21, 22) einen ersten Teil (211, 221) umfasst, den sogenannten lang gestreckten Teil, mit einer bezüglich der Außenfläche (121) der Seitenwand (12) des Reifens (1), auf welcher die Ausstülpung (21, 22) ausgebildet ist, gleichmäßig und monoton wachsenden Höhe, wobei dieser lang gestreckte Teil vom oberen Punkt (Pi) ab durch einen zweiten Teil verlängert ist, den sogenannten verkürzten Teil, mit einer bezüglich der Außenfläche (121) der Seitenwand (12) des Reifens (1), auf welcher die Ausstülpung (21, 22) ausgebildet ist, gleichmäßig und monoton abnehmenden Höhe,
wobei dieser Reifen (1) **dadurch gekennzeichnet ist, dass** für jede Ausstülpung (21, 22) der obere Punkt (Pi) jedes äußeren Profils (210) in der Meridianrichtung (MM') bezüglich der Mittelposition der Ausstülpung (21, 22) versetzt ist, wobei diese Mittelposition für jede radiale Schnittebene als die Position definiert ist, die sich in der Mitte zwischen Schnittpunkten (Ai, Bi) der Ausstülpung (21, 22) mit der Außenfläche (121) der Seitenwand (12), auf welcher die Ausstülpung (21, 22) ausgebildet ist, in derselben radialen Schnittebene befindet, und dadurch, dass
- die Ausstülpungen (21) einer ersten Kreislinie (C1) die Ausstülpungen (22) einer benachbarten Kreislinie (C2) in der Umfangsrichtung (NN') teilweise bedecken, derart, dass ein radiale Ebene, die tangential zu einer auf der ersten Kreislinie (C1) befindlichen Ausstülpung (21) ist, tangential zu einer auf der benachbarten Kreislinie (C2) befindlichen Ausstülpung (22) ist oder diese schneidet, so dass die Ausstülpungen (21) der ersten Kreislinie (C1) und die Ausstülpungen (22) der benachbarten Kreislinie (C2) den Durchgang in der Meridianrichtung (MM') auf dem gesamten Umfang des Reifens (1) schließen, und in der Meridianrichtung (MM'), derart, dass wenigstens ein auf der Drehachse (XX') des Reifens (1) zentrierter Kreis existiert, welcher die Ausstülpungen (21) der ersten Kreislinie (C1) und die Ausstülpungen (22) der benachbarten Kreislinie (C2) schneidet.

2. Reifen (1) nach Anspruch 1, **dadurch gekennzeichnet, dass** jede Ausstülpung (21, 22) erhaben ausgebildet ist, so dass sie eine maximale Höhe (Hi) von höchstens 10 mm aufweist, wobei diese maximale Höhe (Hi) als der Abstand des oberen Punktes (Pi) von der Geraden definiert ist, welche die Schnittpunkte (Ai, Bi) der Ausstülpung (21, 22) mit der Außenfläche (121) der Seitenwand (12), auf welcher die Ausstülpung (21, 22) ausgebildet ist, in derselben radialen Schnittebene verbindet, sowie eine maximale Umfangslänge (Lci) von 20 mm bis 70 mm und eine maximale Meridianlänge (Lmi) von 5 mm bis 15 mm.

3. Reifen (1) nach Anspruch 1 oder Anspruch 2, **dadurch gekennzeichnet, dass** jede auf einer Kreislinie (C1) befindlichen Ausstülpung (21) dafür ausgelegt ist, mit wenigstens einer Ausstülpung (22) einer benachbarten Kreislinie (C2) in Kontakt zu kommen, um eine Reibung durch Gleiten einer Ausstülpung auf einer anderen zu erzeugen, wenn eine der Ausstülpungen (21, 22) mit einem äußeren Hindernis in Kontakt kommt, mit dem Ziel, die Gefahr von Rissen der Seitenwand (12), auf welcher die mehreren Ausstülpungen (21, 22) ausgebildet sind, weiter zu verringern.

4. Reifen (1) nach einem der Ansprüche 1 bis 3, **dadurch gekennzeichnet, dass** alle Ausstülpungen (21, 22) der Schutzvorrichtung (20) so beschaffen sind, dass der obere Punkt (Pi) jedes äußeren Profils (210), das im Schnitt in irgendeiner radialen Schnittebene erhalten wird, in der Meridianrichtung (MM') bezüglich der Mittelposition der Ausstülpung (21, 22) in derselben Richtung versetzt ist, entweder zum Laufstreifen (11) hin oder zum jeweiligen Wulst (13) des Reifens (1) hin.

5. Reifen (1) nach Anspruch 4, **dadurch gekennzeichnet, dass** die Ausstülpungen (21) einer ersten Kreislinie (C1) bezüglich der Ausstülpungen (22) einer benachbarten Kreislinie (C2) entgegengesetzt angeordnet sind, das heißt, dass die oberen Punkte (Pi) der Ausstülpungen (21) auf einer ersten Kreislinie (C1) in der Meridianrichtung (MM') bezüglich der Mittelposition jeder Ausstülpung (21) zum Laufstreifen (11) hin versetzt sind, während die oberen Punkte (Pi) der Ausstülpungen (22) einer benachbarten Kreislinie (C2) zum jeweiligen Wulst (13) des Reifens (1) hin versetzt sind.

6. Reifen (1) nach einem der Ansprüche 1 bis 5, **dadurch gekennzeichnet, dass** das Volumen der Ausstülpungen (21, 22, 23) der Schutzvorrichtung (20) für Kreislinien, die der Drehachse (XX') des Reifens (1) näher sind, kleiner wird.

7. Reifen (1) nach einem der Ansprüche 1 bis 6, **dadurch gekennzeichnet, dass** der obere Punkt (Pi) jeder Ausstülpung (21, 22), welcher der äußerste der Außenfläche (121) der Seitenwand (12) ist, auf welcher die Ausstülpung (21, 22) ausgebildet ist, um mindestens 20 % und um höchstens 40 % der maximalen Meridianlänge (Lmi) der Ausstülpung (21, 22) in der Meridianrichtung (MM') bezüglich der Mittelposition der Ausstülpung (21, 22) versetzt ist.

## Claims

1. Tyre (1) for a vehicle intended to carry heavy loads, this tyre (1) having a crown comprising a tread (11) intended to be in contact with a roadway when rolling, this crown being continued on either side by sidewalls (12), these sidewalls (12) being connected to beads (13) intended to come into contact with a wheel, this tyre (1) comprising a carcass reinforcement having reinforcers, this carcass reinforcement extending from one bead (13) to the other, passing via the sidewalls (12) and the crown of the tyre (1), this tyre (1) being provided, on an external surface (121) of at least one sidewall (12), with a device (20) for protecting against external attack, this protective device (20) being made up of a plurality of protuberances (21, 22) distributed in a number N of circular lines (C1, C2) concentric with the axis of rotation (XX') of the tyre (1), this number N being at least equal to two, each protuberance (21, 22) having an external geometry such that any external profile (210) of this protuberance (21, 22), as seen in any radial section plane containing the axis of rotation (XX') of the tyre (1), is a convex profile having a high point (Pi) defined as being the point furthest from the external surface (121) of the sidewall (12) on which the protuberance (21, 22) is formed, each protuberance (21, 22) having an external surface, the geometry of which does not have any edge corners, apart from the intersection thereof with the external surface (121) of the sidewall (12) on which the protuberance (21, 22) is formed, in order to avoid any slope discontinuity, the external profile (210) of each protuberance (21, 22) comprising a first part (211, 221), referred to as extensive part, with a height that increases regularly and uniformly with respect to the external surface (121) of the sidewall (12) of the tyre (1) on which the protuberance (21, 22) is formed, this extensive part being continued from the high part (Pi) by a second part, referred to as reduced part, with a height that decreases regularly and uniformly with respect to the external surface (121) of the sidewall (12) of the tyre (1) on which the protuberance (21, 22) is formed, this tyre (1) being **characterized in that**, for each protuberance (21, 22), the high point (Pi) of any external profile (210) is offset in the meridian direction (MM') with respect to the median position of the protuberance (21, 22), this median position, for each radial section plane, being defined as the position situated half-way between intersection points (Ai, Bi) of the protuberance (21, 22) with the external surface (121) of the sidewall (12) on which the protuberance (21, 22) is formed in this same radial section plane, and **in that**
- the protuberances (21) of a first circular line (C1) partially overlap the protuberances (22) of an adjacent circular line (C2) in the circumferential direction (NN'), such that a radial plane tangent to a protuberance (21) situated on the first circular line (C1) is tangent to or intersects a protuberance (22) situated on the adjacent circular line (C2) such that the protuberances (21) of the first circular line (C1) and the protuberances (22) of the adjacent circular line (C2) close the passage in the meridian direction (MM') around the entire circumference of the tyre (1), and in the meridian direction (MM'), such that there exists at least one circle centred on the axis of rotation (XX') of the tyre (1), which intersects the protuberances (21) of the first circular line (C1) and the protuberances (22) of the adjacent circular line (C2).

2. Tyre (1) according to Claim 1, **characterized in that** each protuberance (21, 22) is formed in relief so as to have a maximum height (Hi) at most equal to 10 mm, this maximum height (Hi) being defined as the distance of the high point (Pi) from the straight line joining the intersection points (Ai, Bi) of the protuberance (21, 22) to the external surface (121) of the sidewall (12) on which said protuberance (21, 22) is formed in this same radial section plane, and a maximum circumferential length (Lci) of from 20 mm to 70 mm, and a maximum meridian length (Lmi) of from 5 mm to 15 mm.

3. Tyre (1) according to Claim 1 or Claim 2, **characterized in that** each protuberance (21) situated on a circular line (C1) is able to come into contact with at least one protuberance (22) of an adjacent circular line (C2) in order to generate friction by one protuberance sliding over the other when one of said protuberances (21, 22) comes into contact with an external obstacle, in order to further reduce the risks of tears in the sidewall (12) on which the plurality of protuberances (21, 22) are formed.

4. Tyre (1) according to one of Claims 1 to 3, **characterized in that** all the protuberances (21, 22) of the protective device (20) are such that the high point (Pi) of any external profile (210) obtained in section in any radial section plane is offset in the meridian direction (MM') with respect to the median position of the protuberance (21, 22) in one and the same direction, either towards the tread (11) or towards the respective bead (13) of the tyre (1).

5. Tyre (1) according to Claim 4, **characterized in that** the protuberances (21) of a first circular line (C1) are disposed in opposition with respect to the protuberances (22) of an adjacent circular line (C2), meaning that the high points (Pi) of the protuberances (21) on a first circular line (C1) are offset towards the tread (11) in the meridian direction (MM') with respect to the median position of each protuberance (21) while the high points (Pi) of the protuberances (22) of an adjacent circular line (C2) are offset towards the respective bead (13) of the tyre (1).

6. Tyre (1) according to one of Claims 1 to 5, **characterized in that** the volume of the protuberances (21, 22, 23) of the protective device (20) decreases for circular lines closer to the axis of rotation (XX') of the tyre (1).

7. Tyre (1) according to one of Claims 1 to 6, **characterized in that** the high point (Pi) of each outermost protuberance (21, 22) on the external surface (121) of the flank (12) on which said protuberance (21, 22) is formed is offset by at least 20% and by at most 40% of the maximum meridian length (Lmi) of said protuberance (21, 22) in the meridian direction (MM') with respect to the median position of the protuberance (21, 22).
